# EUROPEAN PATENT APPLICATION

(11) **EP 3 188 568 A1**
(43) Date of publication of application: **05.07.2017**
(21) Application number: 15844319.2
(22) Date of filing: 13.02.2015
(51) Int. Cl.: H04W 76/02

(54) **METHOD AND DEVICE FOR REPORTING AND ACQUIRING TERMINAL CAPABILITY**

(30) Priority: 26.09.2014 CN 201410505763
(71) Applicant: ZTE Corporation, Shenzhen, Guangdong 518057 (CN)
(72) Inventor: CHEN, Zhongming, Shenzhen Guangdong 518057 (CN)
(74) Representative: Novagraaf Technologies
(86) International application number: PCT/CN2015/073038
(87) International publication number: WO 2016/045306

(57) **Abstract**

A method and device for reporting or acquiring a terminal capability is provided. In the method for reporting the terminal capability, a terminal reports, to a base station, indication information for indicating that the terminal has a dual connectivity support capability. A terminal reports to a base station indication information for indicating that the terminal has a dual connectivity support capability, thereby solving the technical problem in the related art that the base station is incapable of learning a dual connectivity support capability of the terminal. By virtue of the technical scheme, the base station is enabled to configure a suitable dual connectivity for the terminal according to the dual connectivity capability of the terminal, thereby enhancing user experience.

## Description

### Technical field

The present disclosure relates to the field of communications and, more particularly, to a method and device for reporting or acquiring a terminal capability.

### Background

Due to the lack of spectrum resources and the surge in large-traffic services of mobile users, the demand of using high-frequency points such as 3.5GHz for hot spot coverage is becoming increasingly evident. In order to increase user throughput and enhance mobile performance, the adoption of nodes using low power becomes new application scenarios. However, because the signal attenuation of a high frequency point is relatively severe, a cell has a relatively small coverage, and does not share the same site with the existing cell. Many companies and operators are now inclined to seek new enhanced schemes. Dual connectivity is one of the new enhanced schemes. The terminal can be connected with at least two network nodes at the same time under the dual connectivity, but the terminal is only connected with one of the cells, such as a macro cell, in the control plane. The time delay between different network nodes cannot be ignored. For example, one network node is a macro base station called MeNB (Master eNB), while another network node is a small cell base station called SeNB (Secondary eNB). Within the MeNB or the SeNB, carrier aggregation is supported. In addition, for the service cells on the MeNB and the SeNB, when downlink time difference can be less than 33 microseconds, the dual connectivity is known as a synchronous dual connectivity. When the downlink time difference is greater than 33 microseconds, the dual connectivity is known as an asynchronous dual connectivity. Terminals have tremendous different capabilities, e.g., whether to support a dual connectivity, the degree of supporting the dual connectivity etc., however, the related art has not given any consideration about this. If the base station is incapable of accurately learning the dual connectivity support capability of the terminal, the base station may configure dual connectivity that the terminal does not support for the UE, which not only increases the interaction of signaling, but also makes the terminal experience worse.

There is no valid solution for the above problems in the related art.

### Summary

Embodiments of the present disclosure provide a method and device for reporting or acquiring a terminal capability to solve at least the technical problem in the related art that the base station is incapable of learning a dual connectivity support capability of the terminal.

According to an embodiment of the present disclosure, there is provided a method for reporting a terminal capability. In the method, a terminal reports, to a base station, indication information for indicating that the terminal has a dual connectivity support capability.

In an exemplary embodiment, reporting, by the terminal to the base station, the indication information for indicating that the terminal has the dual connectivity support capability includes at least one of the following steps. The terminal reports, to the base station, first indication information for indicating that the terminal has a synchronous dual connectivity support capability when the terminal supports synchronous dual connectivity. The terminal reports, to the base station, second indication information for indicating that the terminal has an asynchronous dual connectivity support capability when the terminal supports asynchronous dual connectivity.

In an exemplary embodiment, the method further includes at least one of the following processing. When the terminal supports the synchronous dual connectivity, the first indication information is used to indicate that the terminal supports synchronous dual connectivity on band combinations corresponding to all carrier aggregations; or the first indication information is used to indicate that the terminal supports synchronous dual connectivity on band combinations corresponding to a part of carrier aggregations and/or indicate one or more band combinations other than band combinations corresponding to all the carrier aggregations. When the terminal supports the asynchronous dual connectivity, the second indication information is used to individually indicate one or more band combinations on which the terminal supports asynchronous dual connectivity; or the second indication information is used to indicate a combination of band combination serial numbers or a combination of band combination indexes on which the terminal supports the asynchronous dual connectivity.

In an exemplary embodiment, the first indication information indicates the band combinations corresponding to the part of carrier aggregations by bit values.

In an exemplary embodiment, the indication information is used to indicate that the terminal has the dual connectivity support capability in the following manner. Each band combination supported by the terminal is individually indicated in the indication information respectively. Alternatively, a combination of band combination serial numbers or band combination indexes in carrier aggregations supported by the terminal is indicated in the indication information. A dual connectivity type of one of the following: each band combination, a combination of band combination serial numbers, and a combination of band combination indexes, is further indicated in the indication information. The dual connectivity type includes synchronous dual connectivity and asynchronous dual connectivity.

According to another embodiment of the present disclosure, there is provided a method for acquiring a terminal capability. In the method, a base station receives indication information for indicating that the terminal has a dual connectivity support capability, and the indication information is reported by the terminal.

In an exemplary embodiment, receiving, by the base station, the indication information for indicating that the terminal has the dual connectivity support capability includes one of the following steps. The base station receives first indication information reported by the terminal when the terminal supports synchronous dual connectivity, and the first indication information is used for indicating that the terminal has a synchronous dual connectivity support capability. The base station receives second indication information reported by the terminal when the terminal supports asynchronous dual connectivity, and the second indication information is used for indicating that the terminal has an asynchronous dual connectivity support capability.

In an exemplary embodiment, the method further includes at least one of the following processing. When the terminal supports the synchronous dual connectivity, the first indication information is used to indicate that the terminal supports synchronous dual connectivity on band combinations corresponding to all carrier aggregations; or the first indication information is used to indicate that the terminal supports synchronous dual connectivity on band combinations corresponding to a part of carrier aggregations and/or indicate one or more band combinations other than band combinations corresponding to all the carrier aggregations. When the terminal supports the asynchronous dual connectivity, the second indication information is used to individually indicate one or more band combinations on which the terminal supports asynchronous dual connectivity; or the second indication information is used to indicate a combination of band combination serial numbers or a combination of band combination indexes on which the terminal supports the asynchronous dual connectivity.

In an exemplary embodiment, the indication information is used to indicate that the terminal has the dual connectivity support capability in the following manner. Each band combination supported by the terminal is individually indicated in the indication information respectively. Alternatively, a combination of band combination serial numbers or band combination indexes in carrier aggregations supported by the terminal is indicated in the indication information. A dual connectivity type of one of the following: each band combination, a combination of band combination serial numbers, and a combination of band combination indexes, is further indicated in the indication information. The dual connectivity type includes synchronous dual connectivity and asynchronous dual connectivity.

According to still another embodiment of the present disclosure, there is provided a device for reporting a terminal capability, applied to a terminal, including: a reporting module arranged to report, to a base station, indication information for indicating that the terminal has a dual connectivity support capability.

According to still another embodiment of the present disclosure, there is provided a device for acquiring a terminal capability, applied to a base station, including: a receiving module arranged to receive indication information for indicating that the terminal has a dual connectivity support capability, and the indication information is reported by the terminal.

According to the embodiments of the present disclosure, a terminal reports to a base station indication information for indicating that the terminal has a dual connectivity support capability, thereby solving the technical problem in the related art that the base station is incapable of learning a dual connectivity support capability of the terminal. By virtue of the technical scheme, the base station is enabled to configure a suitable dual connectivity for the terminal according to the dual connectivity capability of the terminal, thereby enhancing user experience.

### Brief description of the drawings

The drawings are described here to provide further understanding of the present disclosure, and form a part of the present disclosure. The schematic embodiments and description of the present disclosure are adopted to explain the present disclosure, and do not form limits to the present disclosure. In the drawings:
Fig. 1 is a flow diagram of a method for reporting a terminal capability according to an embodiment of the present disclosure;
Fig. 2 is a structure block diagram of a device for reporting a terminal capability according to an embodiment of the present disclosure;
Fig. 3 is a flow diagram of a method for acquiring a terminal capability according to an embodiment of the present disclosure;
Fig. 4 is a structure block diagram of a device for acquiring a terminal capability according to an embodiment of the present disclosure; and
Fig. 5 is a flow diagram of a method for acquiring a terminal capability according to an exemplary embodiment of the present disclosure.

### Detailed description of the embodiments

The present disclosure is described below with reference to the drawings and the embodiments in detail. It is to be noted that the embodiments of the present disclosure and the characteristics in the embodiments may be combined with each other under the condition of no conflicts.

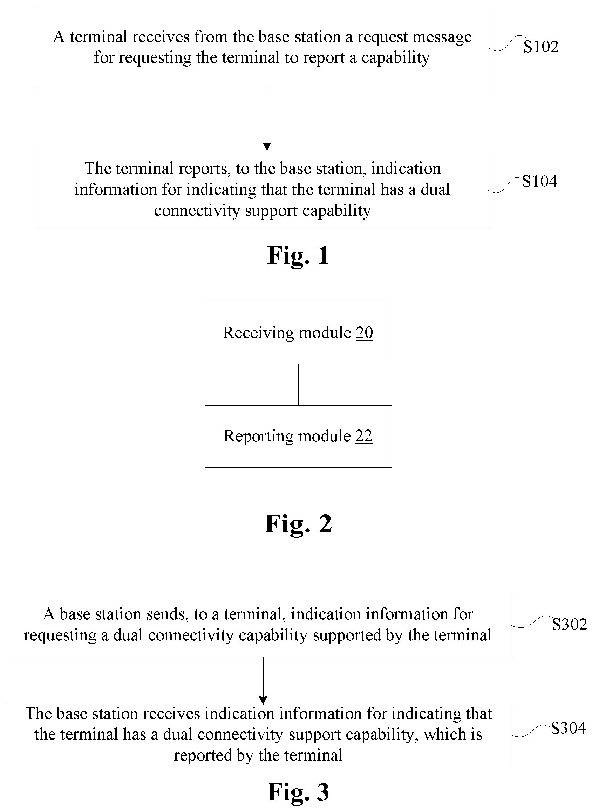

Fig. 1 is a flow diagram of a method for reporting a terminal capability according to an embodiment of the present disclosure. As shown in Fig. 1, the method includes the following steps.

At step S102, a terminal receives from the base station a request message for requesting the terminal to report a capability.

At step S104, The terminal reports, to the base station, indication information for indicating that the terminal has a dual connectivity support capability.

By the above respective processing steps, since the terminal can report to the base station the indication information for indicating that the terminal has a dual connectivity support capability, the base station is enabled to learn a dual connectivity support capability of the terminal. The issues such as increased signaling interaction since the base station is incapable of learning a dual connectivity support capability of the terminal can be avoided, thereby enhancing the user experience.

In an exemplary embodiment, step S102 is optional. That is, the terminal may report the above indication information at the request of the base station or actively report the above indication information.

Step S104 may be embodied as at least one of the following implementations. The terminal reports, to the base station, first indication information for indicating that the terminal has a synchronous dual connectivity support capability when the terminal supports synchronous dual connectivity. The terminal reporting, to the base station, second indication information for indicating that the terminal has an asynchronous dual connectivity support capability when the terminal supports asynchronous dual connectivity.

When the terminal supports the synchronous dual connectivity, the first indication information is used to indicate that the terminal supports synchronous dual connectivity on band combinations corresponding to all carrier aggregations; or the first indication information is used to indicate that the terminal supports synchronous dual connectivity on band combinations corresponding to a part of carrier aggregations and/or indicate one or more band combinations other than band combinations corresponding to all the carrier aggregations.

When the terminal supports the asynchronous dual connectivity, the second indication information is used to individually indicate one or more band combinations on which the terminal supports asynchronous dual connectivity; or the second indication information is used to indicate a combination of band combination serial numbers or a combination of band combination indexes on which the terminal supports the asynchronous dual connectivity.

In an exemplary embodiment, the first indication information indicates the band combinations corresponding to the part of carrier aggregations by bit values when the terminal supports the synchronous dual connectivity for the band combinations corresponding to the part of carrier aggregations.

In an exemplary embodiment, the above indication information in step S104 is also used to indicate that the terminal has the dual connectivity support capability in the following manner.

Each band combination supported by the terminal is individually indicated in the indication information respectively. Alternatively, a combination of band combination serial numbers or band combination indexes in carrier aggregations supported by the terminal is indicated in the indication information. A dual connectivity type of one of the following: each band combination, a combination of band combination serial numbers, and a combination of band combination indexes, is further indicated in the indication information. The dual connectivity type includes synchronous dual connectivity and asynchronous dual connectivity.

An embodiment of the present disclosure provides a device for reporting a terminal capability, applied to a terminal. As shown in Fig. 2, the device includes:
a receiving module 20 arranged to receive, from a base station, a request message for requesting the terminal to report a capability; and
a reporting module 22 coupled to the receiving module 20 and arranged to report, to the base station, indication information for indicating that the terminal has a dual connectivity support capability.

It should be noted that each of the above modules may be implemented by software or hardware, and may be embodied as, but not limited to, the following form when being implemented by hardware: the receiving module 20 and the reporting module 22 are located in the same processor, or the receiving module 20 and the reporting module 22 are located in the first processor and the second processor, respectively.

Another embodiment of the present disclosure provides a method for acquiring a terminal capability. As shown in Fig. 3, the method includes the following steps.

At step S302: A base station sends, to a terminal, indication information for requesting a dual connectivity capability supported by the terminal.

At step S304, the base station receives indication information for indicating that the terminal has a dual connectivity support capability, and the indication information is reported by the terminal.

It is to be noted that step S302 is optional.

The implementations of step S302 may be embodied as, but not limited to, at least one of the following forms. The above base station receives first indication information reported by the terminal when the above terminal supports synchronous dual connectivity, and the first indication information is used for indicating that the above terminal has a synchronous dual connectivity support capability. The above base station receives second indication information reported by the terminal when the above terminal supports asynchronous dual connectivity, and the second indication information is used for indicating that the above terminal has an asynchronous dual connectivity support capability.

When the terminal supports the synchronous dual connectivity, the above first indication information is used to indicate that the terminal supports synchronous dual connectivity on band combinations corresponding to all carrier aggregations; or the above first indication information is used to indicate that the terminal supports synchronous dual connectivity on band combinations corresponding to a part of carrier aggregations and/or indicate one or more band combinations other than band combinations corresponding to all the carrier aggregations.

When the terminal supports the asynchronous dual connectivity, the above second indication information is used to individually indicate one or more band combinations on which the terminal supports asynchronous dual connectivity; or the second indication information is used to indicate a combination of band combination serial numbers or a combination of band combination indexes on which the terminal supports the asynchronous dual connectivity.

Optionally, the above indication information is used to indicate that the above terminal has the dual connectivity support capability in the following manner. Each band combination supported by the terminal is individually indicated in the indication information respectively. Alternatively, a combination of band combination serial numbers or band combination indexes in carrier aggregations supported by the terminal is indicated in the indication information. A dual connectivity type of one of the following: each band combination, a combination of band combination serial numbers, and a combination of band combination indexes, is further indicated in the indication information. The dual connectivity type includes synchronous dual connectivity and asynchronous dual connectivity.

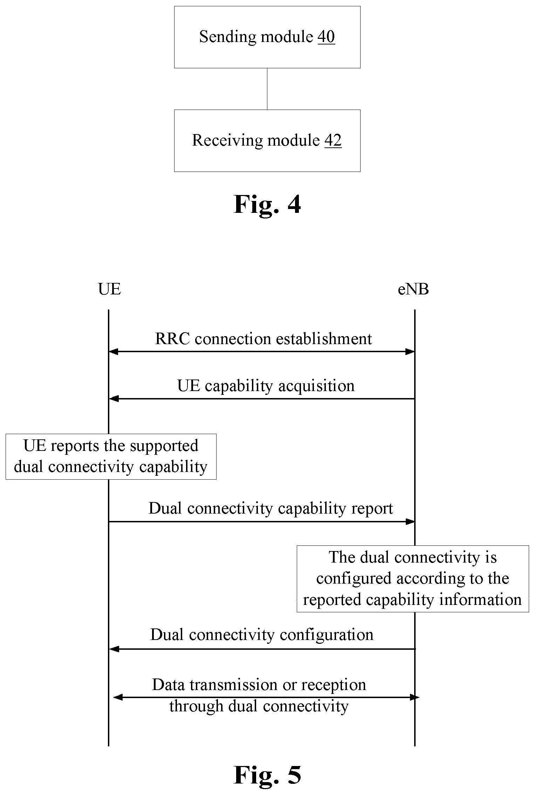

Another embodiment of the present disclosure provides a device for acquiring a terminal capability, applied to a base station, for implementing the method shown in Fig. 3. As shown in Fig. 4, the device includes:
a sending module 40 arranged to send, to a terminal, indication information for requesting a dual connectivity capability supported by the terminal; and
a receiving module 42 coupled to the sending module 40 and arranged to receive indication information for indicating that the terminal has a dual connectivity support capability, and the indication information is reported by the terminal.

It should be noted that each of the above modules may be implemented by software or hardware, and may be embodied as, but not limited to, the following form when being implemented by hardware: the sending module 40 and the receiving module 42 are located in the same processor, or the sending module 40 and the receiving module 42 are located in the third processor and the fourth processor, respectively.

For a better understanding of the above embodiments, the following detailed description will be made with reference to exemplary embodiments. The design idea of the following exemplary embodiments is described in detail as follows. According to a first method, a terminal supporting a synchronous dual connectivity reports whether or not the synchronous dual connectivity is supported. If support information is reported, synchronous dual connectivity is supported for band combinations of all carrier aggregations. Alternatively, if a bit indication for each band combination is reported, that is, only a part of the band combinations is supported, one or more band combinations other than the band combinations corresponding to the carrier aggregations can be further reported. According to a second method, a terminal supporting an asynchronous dual connectivity reports whether or not the asynchronous dual connectivity is supported. If support information is reported, the supported band combinations are individually indicated. The combination may be a combination of band combinations on MeNB and SeNB, or may be a combination of band combination serial numbers or indexes in the carrier aggregations. In addition, it is also possible to adopt the method mentioned in the above second method for configuring the band combinations on which the synchronous dual connectivity is supported. That is, for the dual connectivity terminal capability, both the synchronous dual connectivity and the asynchronous dual connectivity may adopt the second method for indication, and then it can be further distinguished which band combination supports synchronous dual connectivity and which band combination supports asynchronous dual connectivity.

The following embodiment may be based on the flow shown in Fig. 5.

In the following embodiment, the base station 1 is a macro base station with three cells, in which cell 1 belongs to band 1, cell 2 belongs to band 2, and cell 3 belongs to band 3. The base station 2 is a small cell base station with three cells, in which cell 4 belongs to band 2, cell 5 belongs to band 5, and cell 6 belongs to band 6. The following embodiments describe the scenario that supports up to two or three bands. The scenarios that support other number of bands at most can adopt the same method, which will not be described again.

### Embodiment 1

The flow schematic diagram of the UE reporting the measuring capability and the base station configuring the dual connectivity according to the first embodiment of the present disclosure is shown in Fig. 5.

At step 1, in this embodiment, the UE is in a connected state after completing an RRC establishment process in cell 1 of the E-UTRAN system.

At step 2, the base station requests the UE to report the capability information. The UE reports the following carrier aggregation capability information according to its own capability. The terminal supports bands 1, 2 and 5, and supports aggregation of up to two carriers. Herein, the first band and the second band are specified only to facilitate the description on the support of carrier aggregation for frequencies on the first band and the second band, rather than limiting the sequence of the bands. The capability of supporting carrier aggregation reported by the UE in the first embodiment can be as shown in Table 1.1. For example, if the carrier aggregation band combination serial number is 5, the terminal supports carrier aggregation on band 1 and band 2.

**Table 1.1**

| Carrier aggregation band combination serial number | A first band | A second band |
|---|---|---|
| 1 | 1 | NULL |
| 2 | 2 | NULL |
| 3 | 5 | NULL |
| 4 | 1 | 1 |
| 5 | 1 | 2 |
| 6 | 1 | 5 |
| 7 | 2 | 1 |
| 8 | 2 | 2 |
| 9 | 2 | 5 |

At step 3, the terminal supports synchronous dual connectivity, and reports the capability of supporting synchronous dual connectivity. That is, the terminal supports synchronous dual connectivity on the band combinations in Table 1.1.

At step 4, the terminal does not support the asynchronous dual connectivity, so the terminal does not report the capability of asynchronous dual connectivity.

At step 5, the base station acquires the capability information reported by the terminal, and learns that the terminal supports the carrier aggregation and the synchronous dual connectivity on band 1 and band 2. Cell 1 belongs to band 1, and cell 2 and cell 4 belong to band 2.

At step 6: Since the service traffic increases, and according to the measurement report, the signal quality of cell 4 is better than that of cell 2 and the terminal supports the synchronous dual connectivity on band 1 and band 2, the base station configures cell 4 for the terminal, and the terminal receives and sends data via the synchronous dual connectivity through cell 1 and cell 4.

In the above step 3, if the terminal only supports the synchronous dual connectivity on a part of the band combinations in Table 1.1, it is possible to increase an indicator for each band combination, indicating whether the synchronous dual connectivity is supported on this band combination. Alternatively, it is also possible to indicate such information by a bitmap. For example, the terminal only supports synchronous dual connectivity on the band combinations 1, 2, 3, 5, and 6, then the bitmap 111011000 is reported to the base station. The first bit from the left indicates the band combination 1, and so on to the right. The bit is set to be 1 to indicate the band combination on which the synchronous dual connectivity is supported.

In step 3, if the terminal also supports the synchronous dual connectivity on band 5 and band 5, but the terminal does not support the carrier aggregation of band 5 and band 5 and there is no corresponding carrier aggregation band combination serial number for this combination, the terminal needs to report the following additional content shown in Table 1.2. The synchronous dual connectivity band combination serial number in Table 1.2 should not be the same as the carrier aggregation band combination serial number in Table 1.1.

**Table 1.2**

| Synchronous dual connectivity band combination serial number | A first band | A second band |
|---|---|---|
| 10 | 5 | 5 |

### Embodiment 2

The flow schematic diagram of the UE reporting the measuring capability and the base station configuring the dual connectivity according to the second embodiment of the present disclosure is shown in Fig. 5.

At step 1, in this embodiment, the UE is in a connected state after completing an RRC establishment process in cell 1 of the E-UTRAN system.

At step 2, the base station requests the UE to report the capability information. The UE reports the following carrier aggregation capability information according to its own capability. The terminal supports bands 1, 2 and 5, and supports aggregation of up to two carriers. Herein, the first band and the second band are specified only to facilitate the description on the support of carrier aggregation for frequencies on the first band and the second band, rather than limiting the sequence of the band. The capability of supporting carrier aggregation reported by the UE in the second embodiment can be as shown in Table 2.1. For example, if the carrier aggregation band combination serial number is 5, the terminal supports carrier aggregation on band 1 and band 5.

**Table 2.1**

| Carrier aggregation band combination serial number | A first band | A second band |
|---|---|---|
| 1 | 1 | NULL |
| 2 | 2 | NULL |
| 3 | 5 | NULL |
| 4 | 1 | 2 |
| 5 | 1 | 5 |
| 6 | 2 | 1 |
| 7 | 2 | 5 |

At step 3, the terminal supports synchronous dual connectivity, and reports the capability of supporting synchronous dual connectivity. That is, the terminal supports synchronous dual connectivity on the band combinations in Table 2.1.

At step 4, the terminal supports asynchronous dual connectivity, and reports the capability of supporting asynchronous dual connectivity. That is, the terminal directly reports the support of the asynchronous dual connectivity in Table 2.2, and does not need to separately indicate the capability of supporting asynchronous dual connectivity. The asynchronous dual connectivity band combination serial number in the table can be the same as the carrier aggregation band combination serial number in Table 2.1, such as 1, 2, 3, and the asynchronous dual connectivity band combination serial number can also be different, such as 101, 102, 103, and so on. If the asynchronous dual connectivity band combination serial number is 3, the terminal supports asynchronous dual connectivity for the carrier aggregation combination serial band number 4 on MeNB (corresponding to band 1 and band 2 according to Table 2.1) and the carrier aggregation combination serial band number 2 on SeNB (corresponding to band 2 according to Table 2.1).

**Table 2.2**

| Asynchronous dual connectivity band combination serial number | On MeNB | On SeNB |
|---|---|---|
| 1 | 1 | 1 |
| 2 | 2 | 3 |
| 3 | 4 | 2 |

At step 5, the base station acquires the capability information reported by the terminal, and learns that the terminal supports the carrier aggregation and the synchronous dual connectivity on band 1 and band 2, supports the asynchronous dual connectivity on band 1 and band 2 on MeNB and supports the asynchronous dual connectivity on band 2 on SeNB. Cell 1 belongs to band 1, and cell 2 and cell 4 belong to band 2.

At step 6: Since the service traffic increases, and according to the measurement report, the signal quality of cell 2 and cell 4 is very good and the terminal supports the asynchronous dual connectivity on band 1 and band 2 on MeNB and band 2 on SeNB, the base station configures cell 2 and cell 4 for the terminal. The terminal receives and sends data via the asynchronous dual connectivity through cell 1, cell 2 and cell 4.

In the above step 4, it is also possible to directly describe a specific band combination as described in Table 2.3 below. For example, if the asynchronous dual connectivity band combination serial number is 3, the terminal supports the asynchronous dual connectivity on band 1 and band 2 on MeNB and supports the asynchronous dual connectivity on band 2 on SeNB.

**Table 2.3**

| Asynchronous dual connectivity band combination serial number | On MeNB | | On SeNB | |
|---|---|---|---|---|
| | A first band | A second band | A first band | A second band |
| 1 | 1 | NULL | | NULL |
| 2 | 2 | NULL | | NULL |
| 3 | 1 | 2 | | NULL |

### Embodiment 3

The flow schematic diagram of the UE reporting the measuring capability and the base station configuring the dual connectivity according to the third embodiment of the present disclosure is shown in Fig. 5.

At step 1, in this embodiment, the UE is in a connected state after completing an RRC establishment process in cell 1 of the E-UTRAN system.

At step 2, the base station requests the UE to report the capability information. The UE reports the following carrier aggregation capability information according to its own capability. The terminal supports bands 1, 2 and 5, and supports aggregation of up to three carriers. Herein, the first band, the second band and the third band are specified only to facilitate the description on the support of carrier aggregation for frequencies on the first band, the second band and the third band, rather than limiting the sequence of the bands. The capability of supporting carrier aggregation reported by the UE in the third embodiment can be as shown in Table 3.1. For example, if the carrier aggregation band combination serial number is 7, the terminal supports carrier aggregation on band 1, band 2 and band 5.

**Table 3.1**

| Carrier aggregation band combination serial number | A first band | A second band | A third band |
|---|---|---|---|
| 1 | 1 | NULL | NULL |
| 2 | 2 | NULL | NULL |
| 3 | 5 | NULL | NULL |
| 4 | 1 | 2 | NULL |
| 5 | 2 | 1 | NULL |
| 6 | 2 | 5 | NULL |
| 7 | 1 | 2 | 5 |

At step 3, the terminal supports synchronous dual connectivity, and reports the capability of supporting synchronous dual connectivity. That is, the terminal supports synchronous dual connectivity on the band combinations in Table 3.1.

If the terminal also supports the synchronous dual connectivity on band 5 and band 5, but the terminal does not support the carrier aggregation terminal of band 5 and band 5 and there is no corresponding carrier aggregation combination serial band number, the terminal needs to report the following additional content shown in Table 3.2. The synchronous dual connectivity band combination serial number in Table 3.2 should not be the same as the carrier aggregation band combination serial number in Table 3.1.

**Table 3.2**

| Synchronous dual connectivity band combination serial number | A first band | A second band | A third band |
|---|---|---|---|
| 10 | 5 | 5 | NULL |

At step 4, the terminal supports asynchronous dual connectivity, and reports the capability of supporting asynchronous dual connectivity. That is, the terminal supports the asynchronous dual connectivity in Table 3.3. The asynchronous dual connectivity band combination serial number in the table can be the same as the carrier aggregation combination serial band number and the synchronous dual connectivity band combination serial number in Table 3.1 and Table 3.2, such as 1, 2, 3, and the asynchronous dual connectivity band combination serial number in the table can also be different, such as 101, 102, 103, and so on. If the asynchronous dual connectivity band combination serial number is 104, the terminal supports asynchronous dual connectivity on the carrier aggregation combination serial band number 4 on MeNB (corresponding to band 1 and band 2 according to Table 3.1) and the carrier aggregation combination serial band number 6 on SeNB (corresponding to band 2 and band 5 according to Table 3.1).

**Table 3.3**

| Asynchronous dual connectivity band combination serial number | On MeNB | On SeNB |
|---|---|---|
| 101 | 1 | 2 |
| 102 | 2 | 3 |
| 103 | 3 | 2 |
| 104 | 4 | 6 |

At step 5, the base station acquires the capability information reported by the terminal, and learns that the terminal supports the carrier aggregation and the synchronous dual connectivity on band 1 and band 2, and supports the asynchronous dual connectivity on band 1 and band 2 on MeNB and supports the asynchronous dual connectivity on band 2 and band 5 on SeNB. Cell 1 belongs to band 1, cell 2 and cell 4 belong to band 2, and cell 5 belongs to band 5.

At step 6: Since the service traffic increases, and according to the measurement report, the signal quality of cell 2, cell 4 and cell 5 is very good and the terminal supports the asynchronous dual connectivity on band 1 and band 2 on MeNB and band 2 and band 5 on SeNB, the base station configures cell 2, cell 4 and cell 5 for the terminal. The terminal receives and sends data via the asynchronous dual connectivity through cell 1, cell 2, cell 4 and cell 5.

### Embodiment 4

The flow schematic diagram of the UE reporting the measuring capability and the base station configuring the dual connectivity according to the fourth embodiment of the present disclosure is shown in Fig. 5.

At step 1, in this embodiment, the UE is in a connected state after completing an RRC establishment process in cell 1 of the E-UTRAN system.

At step 2, the base station requests the UE to report the capability information. The UE reports the following carrier aggregation capability information according to its own capability. The terminal supports bands 1, 2 and 5, and supports aggregation of up to two carriers. Herein, the first band and the second band are specified only to facilitate the description on the support of carrier aggregation for frequencies on the first band and the second band, rather than limiting the sequence of the band. The capability of supporting carrier aggregation reported by the UE in the fourth embodiment can be as shown in Table 4.1. For example, if the carrier aggregation band combination serial number is 5, the terminal supports carrier aggregation on band 1 and band 5.

**Table 4.1**

| Carrier aggregation band combination serial number | A first band | A second band |
|---|---|---|
| 1 | 1 | NULL |
| 2 | 2 | NULL |
| 3 | 5 | NULL |
| 4 | 1 | 2 |
| 5 | 1 | 5 |
| 6 | 2 | 1 |
| 7 | 2 | 5 |

At step 3, the terminal supports synchronous dual connectivity and asynchronous dual connectivity, and does not need to separately report the capability of supporting synchronous dual connectivity and asynchronous dual connectivity, but directly reporting that the terminal supports synchronous dual connectivity and asynchronous dual connectivity in Table 4.2. The dual connectivity band combination serial number in the table can be the same as the carrier aggregation combination serial band number in Table 4.1, such as 1, 2, 3; and the asynchronous dual connectivity band combination serial number in the table can also be different, such as 101, 102, 103, and so on. If the dual connectivity band combination serial number is 3, the terminal supports dual connectivity for the carrier aggregation combination serial band number 4 on MeNB (corresponding to band 1 and band 2 according to Table 4.1) and supports dual connectivity for the carrier aggregation combination serial band number 2 on SeNB (corresponding to band 2 according to Table 4.1). On this basis, the terminal also needs to report, to the base station, the specific band combination for which synchronous and asynchronous dual connectivity is supported by adding an indication after each band combination. Whether to support synchronous and asynchronous dual connectivities is as shown in the last two columns in Table 4.2. Alternatively, the UE may also indicate to the base station in the manner of a bitmap. For example, for the bitmap 110 indicating the support of synchronous dual connectivity, the first bit from the left, which represents the dual connectivity band combination serial number 1, is set as 1 to indicate that for this combination the synchronous dual connectivity is supported. The second bit, which represents the dual connectivity band combination serial number 2, is set as 1 to indicate that for this combination the synchronous dual connectivity is supported. The third bit, which represents the dual connectivity band combination serial number 3, is set as 0 to indicate that for this combination the synchronous dual connectivity is not supported. For another example, for a bitmap 101 indicating the support of asynchronous dual connectivity, the first bit from the left, which represents the dual connectivity band combination serial number 1, is set as 1 to indicate that for this combination the asynchronous dual connectivity is supported. The second bit, which represents the dual connectivity band combination serial number 2, is set as 0 to indicate that for this combination the asynchronous dual connectivity is not supported. The third bit, which represents the dual connectivity band combination serial number 3, is set as 1 to indicate that for this combination the asynchronous dual connectivity is supported.

**Table 4.2**

| Dual connectivity band combination serial number | On MeNB | On SeNB | Whether to support synchronous dual connectivity on the band combination | Whether to support asynchronous dual connectivity on the band combination |
|---|---|---|---|---|
| 1 | 1 | 1 | Yes | Yes |
| 2 | 2 | 3 | Yes | No |
| 3 | 4 | 2 | No | Yes |

At step 5, the base station acquires the capability information reported by the terminal, and learns that the terminal supports the carrier aggregation and the synchronous dual connectivity on band 1 and band 2, and supports the asynchronous dual connectivity on band 1 and band 2 on MeNB and supports the asynchronous dual connectivity on band 2 on SeNB. Cell 1 belongs to band 1, and cell 2 and cell 4 belong to band 2.

At step 6: Since the service traffic increases, and according to the measurement report, the signal quality of cell 2 and cell 4 is very good and the terminal supports the asynchronous dual connectivity on band 1 and band 2 on MeNB and supports the asynchronous dual connectivity on band 2 on SeNB, the base station configures cell 2 and cell 4 for the terminal. The terminal receives and sends data via the asynchronous dual connectivity through cell 1, cell 2 and cell 4.

It is to be noted that in the first to fourth embodiments, the terminal may not have to report upon the request of the base station, but can also directly and actively report the dual connectivity capability information.

In view of the above, the embodiments of the present disclosure have the following beneficial effects. Employment of the above technical solution provided in the embodiments of the present disclosure extends the capability of the terminal. By virtue of the technical scheme, the base station is enabled to configure a suitable dual connectivity according to the dual connectivity capability of the terminal, thereby enhancing user experience.

It should be noted that the "first", "second", "third" and "fourth" referred to in the embodiments of the present disclosure are used only for distinguishing and do not limit the order.

In another embodiment, there is also provided a software for performing the technical solution described in the above embodiments and exemplary embodiments.

In another embodiment, there is also provided a storage medium in which the above software is stored, including but not limited to optical disks, floppy disks, hard disks, rewritable memories, and the like.

Obviously, those skilled in the art should know that each module or step of the embodiment of the present disclosure may be implemented by a universal computing device, and the modules or steps may be concentrated on a single computing device or distributed on a network formed by a plurality of computing devices, and may optionally be implemented by programmable codes executable for the computing devices, so that the modules or steps may be stored in a storage device for execution with the computing devices, and, in some cases, the steps shown or described may be performed in a order different from the order herein, or the modules or steps may form each integrated circuit module, or multiple modules or steps therein may form a single integrated circuit module for implementation. As a consequence, the present disclosure is not limited to any specific hardware and software combination.

The above is only the exemplary embodiment of the present disclosure and not intended to limit the present disclosure, and for the technician of the field, the present disclosure may have various modifications and variations. Any modifications, equivalent replacements, improvements and the like within the principle of the present disclosure shall fall within the scope of protection as defined in the appended claims of the present disclosure.

### Industrial Applicability

Base on the above technical solution provided in the embodiments of the present disclosure, a terminal reports to a base station indication information for indicating that the terminal has a dual connectivity support capability, thereby solving the technical problem in the related art that the base station is incapable of learning a dual connectivity support capability of the terminal. By virtue of the technical scheme, the base station is enabled to configure a suitable dual connectivity for the terminal according to the dual connectivity capability of the terminal, thereby enhancing user experience.

## Claims

1. A method for reporting a terminal capability, comprising:
reporting, by a terminal to a base station, indication information for indicating that the terminal has a dual connectivity support capability.

2. The method as claimed in claim 1, wherein reporting, by the terminal to the base station, the indication information for indicating that the terminal has the dual connectivity support capability comprises at least one of:
reporting, by the terminal to the base station, first indication information for indicating that the terminal has a synchronous dual connectivity support capability when the terminal supports synchronous dual connectivity; and
reporting, by the terminal to the base station, second indication information for indicating that the terminal has an asynchronous dual connectivity support capability when the terminal supports asynchronous dual connectivity.

3. The method as claimed in claim 2, wherein
when the terminal supports the synchronous dual connectivity, the first indication information is used to indicate that the terminal supports synchronous dual connectivity on band combinations corresponding to all carrier aggregations; or the first indication information is used to indicate that the terminal supports synchronous dual connectivity on band combinations corresponding to a part of carrier aggregations and/or indicate one or more band combinations other than band combinations corresponding to all the carrier aggregations; and/or,
when the terminal supports the asynchronous dual connectivity, the second indication information is used to individually indicate one or more band combinations on which the terminal supports asynchronous dual connectivity; or the second indication information is used to indicate a combination of band combination serial numbers or a combination of band combination indexes on which the terminal supports the asynchronous dual connectivity.

4. The method as claimed in claim 3, wherein the first indication information indicates the band combinations corresponding to the part of carrier aggregations by bit values.

5. The method as claimed in claim 1, wherein the indication information is used to indicate that the terminal has the dual connectivity support capability in the following manner:
individually indicating, in the indication information, each band combination supported by the terminal respectively, or indicating, in the indication information, a combination of band combination serial numbers or band combination indexes in carrier aggregations supported by the terminal; and further indicating, in the indication information, a dual connectivity type of one of the following: each band combination, a combination of band combination serial numbers, and a combination of band combination indexes, wherein the dual connectivity type comprises synchronous dual connectivity and asynchronous dual connectivity.

6. A method for acquiring a terminal capability, comprising:
receiving, by a base station, indication information for indicating that a terminal has a dual connectivity support capability, wherein the indication information is reported by the terminal.

7. The method as claimed in claim 6, wherein receiving, by the base station, the indication information for indicating that the terminal has the dual connectivity support capability comprises one of:
receiving, by the base station, first indication information reported by the terminal when the terminal supports synchronous dual connectivity, wherein the first indication information is used for indicating that the terminal has a synchronous dual connectivity support capability; and
receiving, by the base station, second indication information reported by the terminal when the terminal supports asynchronous dual connectivity, wherein the second indication information is used for indicating that the terminal has an asynchronous dual connectivity support capability.

8. The method as claimed in claim 7, wherein
when the terminal supports the synchronous dual connectivity, the first indication information is used to indicate that the terminal supports synchronous dual connectivity on band combinations corresponding to all carrier aggregations; or the first indication information is used to indicate that the terminal supports synchronous dual connectivity on band combinations corresponding to a part of carrier aggregations and/or indicate one or more band combinations other than band combinations corresponding to all the carrier aggregations; and/or,
when the terminal supports the asynchronous dual connectivity, the second indication information is used to individually indicate one or more band combinations on which the terminal supports asynchronous dual connectivity; or the second indication information is used to indicate a combination of band combination serial numbers or a combination of band combination indexes on which the terminal supports the asynchronous dual connectivity.

9. The method as claimed in claim 6, wherein the indication information is used to indicate that the terminal has the dual connectivity support capability in the following manner:
individually indicating, in the indication information, each band combination supported by the terminal respectively, or indicating, in the indication information, a combination of band combination serial numbers or band combination indexes in carrier aggregations supported by the terminal; and further indicating, in the indication information, a dual connectivity type of one of the following: each band combination, a combination of band combination serial numbers, and a combination of band combination indexes, wherein the dual connectivity type includes synchronous dual connectivity and asynchronous dual connectivity.

10. A device for reporting a terminal capability, applied to a terminal, comprising:
a reporting module arranged to report, to a base station, indication information for indicating that the terminal has a dual connectivity support capability.

11. A device for acquiring a terminal capability, applied to a base station, comprising:
a receiving module arranged to receive indication information for indicating that a terminal has a dual connectivity support capability, wherein the indication information is reported by the terminal.
